(19) Europäisches Patentamt / European Patent Office / Office européen des brevets

(11) **EP 2 346 158 A1**

(12) **EUROPEAN PATENT APPLICATION**
published in accordance with Art. 153(4) EPC

(43) Date of publication:
**20.07.2011 Bulletin 2011/29**

(51) Int Cl.:
**H02P 9/04** $^{(2006.01)}$

(21) Application number: **09823290.3**

(86) International application number:
**PCT/JP2009/005649**

(22) Date of filing: **27.10.2009**

(87) International publication number:
**WO 2010/050177 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.10.2008 JP 2008276331**

(71) Applicants:
- **Sawafuji Electric Co., Ltd.
Gunma 370-0344 (JP)**
- **Yanmar Co., Ltd.
Osaka-shi, Osaka 530-8311 (JP)**

(72) Inventors:
- **NAMAI, Masao
Ota-shi
Gunma 370-0344 (JP)**

- **YOSHIOKA, Toru
Ota-shi
Gunma 370-0344 (JP)**
- **AZUMA, Shinichi
Ota-shi
Gunma 370-0344 (JP)**
- **KARASAWA, Yukio
Ota-shi
Gunma 370-0344 (JP)**
- **HIBI, Shinji
Osaka-shi
Osaka 530-8311 (JP)**
- **ABE, Takashi
Osaka-shi
Osaka 530-8311 (JP)**

(74) Representative: **Görz, Ingo
Hoefer & Partner
Patentanwälte
Pilgersheimer Straße 20
D-81543 München (DE)**

(54) **INVERTER GENERATOR**

(57) A control circuit (microcomputer) is provided in each of two inverter portions. Magnitude of a target waveform signal corresponding to a voltage to be output by each of the inverter portions is varied according to an operation state. The number of revolution of the engine is adjusted according to the larger one of the effective powers output from the two inverter portions. To cope with a temporary output shortage from the AC generator, the output voltage is temporarily lowered and then the output voltage is restored after waiting for the number of revolution of the engine increases.

FIG. 1

EP 2 346 158 A1

## Description

Technical Field

The present invention relates to an inverter generator for feeding an electric power by the so-called single-phase three-wire system in which inverter portions are connected to an engine-driven generator and respective outputs of smoothing filters being connected to the inverter portions are connected in series.

Background Art

Generally, the inverter portions are connected to the engine-driven generator, and an electric power at a predetermined AC voltage at a predetermined frequency is fed. Further, respective outputs of plural inverter portions are connected in parallel and an electric power is fed to the load.
In this manner, when the inverter portions are connected in parallel, output voltages of two inverter portions are controlled equally, for example. In this case, when there is a discrepancy in output frequency between two inverter portions, a difference arises between effective powers that are allotted between two inverter portions respectively. When a discrepancy in the output voltages occurs, a reactive power circulates between the inverter portions.
Meanwhile, in the above control, the configuration for executing the control by using a one-chip microcomputer, for example, is employed. In this case, an interrupt is produced 128 times in one period, for example, to synchronize with phases of the output voltages of the inverter portions or the AC sine voltages corresponding to the target waveform signal. Then, instantaneous values of the output currents being output from the inverter portions, DC voltages at input ends of the inverter portions, or the like in accordance with these interrupts is measured and accumulated, so that the effective powers and the reactive powers are calculated. In accordance with these interrupts, the output frequencies (phases) are controlled, the number of revolution of the engine is controlled, and the information is exchanged mutually between plural inverter portions (see Patent Literature 1).

Prior Technology Literature

Patent Literature

     Patent Literature 1: JP-A-2005-286540 Official Gazette

Summary of the Invention

Problems that the invention is to Solve

In the conventional case, as described above, it is considered that the inverter portions is driven in parallel, and thus the control is applied to meet such driving scheme. Recently, it becomes considered that an electric power is fed by the so-called single-phase three-wire system in which respective outputs of two inverter portions are connected in series, for example.
In such case, the loads imposed to the inverter portions are unbalanced in some cases, e.g., such a situation is caused that the heavy load is connected only to any one inverter portion out of two inverter portions, or the like. Such a situation is caused that one of the loads connected to respective inverter portions is the inductive load whereas the other of the loads is the capacitive load. The output voltage- output current characteristic becomes different to correspond to the property of such load. In spite of this fact, it is desired that the output voltage-output current characteristic should be made flat.
Generally speaking, various considerations are taken, e.g., generation of a noise should be suppressed by keeping the number of revolution of the engine small, and the like, when the load connected to the feeder line is light. In this case, for example, when the electric motor connected as the load is started, a large start current runs through the motor. Under ordinary circumstances, the revolution of the engine should be increased in response to the start of the motor, however an increase of the number of revolution of the engine is slowed down.
An object of the present invention is to drive two inverter portions, for example, in a desired mode by using a one-chip microcomputer even when such inverter portions are connected.
The present invention intends particularly to apply effectively a control to the number of revolution of an engine.

Means for Solving the Problems

The present invention relates to an inverter generator. In the case of the inverter generator, in view of the fact that the load is connected only to one side of two inverter portions, for example, the number of revolution of the engine is decided by

$$\text{Reference command number of revolution} = k \cdot (\text{large one of } Pm \text{ and } Ps) \quad (\text{where } Pm \text{ and } Ps \text{ are the effective power respectively})$$

, based on the effective power on the side of the inverter portion that is feeding the larger effective power.

In the permanent magnet type multipolar generator, in some cased a reduction of the output voltage is caused in the overheat state because of the characteristics of the magnet since the permanent magnet is employed. For this reason, the number of revolution of the engine is set to "a little higher value" under the assumption that the engine becomes short of the output under the occurrence of the overheat state. Essentially, it is desired that the number of revolution of the engine should be lower to suppress the noise when an ambient temperature is low, nevertheless the number of revolution of the engine is still kept at "a little higher value" due to the above situation. In order to overcome this drawback, a means for increasing the number of revolution of the engine as output power from the inverter portion is increased should be provided, and then the number of revolution of the engine should be set to "a little lower value" than that in the prior art to prevent the overheat when the ambient temperature is low, so that the number of revolution of the engine can be set as lower as possible. That is, the number of revolution of the engine may be set by

$$\text{Corrected reference command number of revolution} = (\text{set value by the effective power}) + (\text{corrected portion by a state of the DC link voltage}).$$

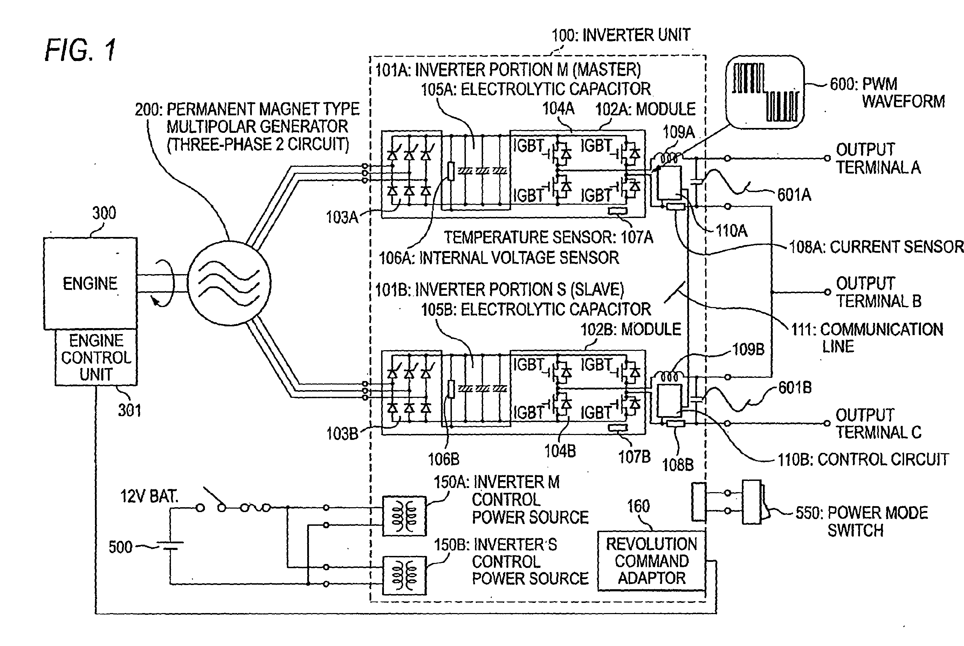

Further, when no load is applied to the inverter portion, normally the number of revolution of the engine is suppressed lower to improve a fuel consumption and suppress the noise. In this case, a time lag is caused in an increase of the number of revolution of the engine at a time when the load is shifted suddenly to the high load state. In order to overcome this drawback, the situation where the high load state (the power mode) may be caused should be assumed manually, and then the number of revolution of the engine should be set at the time of no load to respond to the power mode. That is, a power mode switch shown in FIG.1 (at the lower right in FIG. 1) as described later should be provided.

Advantages of the Invention

According to the present invention,

(i) the inverter generator can deal with such a situation that the loads of the inverter portions become unbalanced,
(ii) the number of revolution of the engine can be decreased as low as possible when the output power of the inverter portion is small, and
(iii) the inverter generator can deal with such a situation that the load is shifted to a sharp high load, by assuming that effect under the condition that the high load state (the power mode) may be caused. As a result, even the load that does not like a reduction of the output voltage at a time of high load can be connected to the inverter generator.

Brief Description of the Drawings

FIG.1 is a view showing a configuration of one embodiment of the present invention.
FIG.2 is a view showing a configuration that drives/ controls one of inverter portions shown in FIG.1.
FIG.3 is a view showing a processing configuration in a control circuit (one-chip microcomputer).
FIG.4 is a view showing timings at which processes are executed in the control circuit (one-chip microcomputer).
FIG.5 is a view showing a flowchart used to start an endless loop.
FIG.6 is a view showing processed contents in a status 1 to a status 4 that are executed in response to the endless loop.

FIG.7 is a view showing processed contents in the endless loop.

FIG.8 is a view showing processed contents in the endless loop.

FIG.9 is a view showing a flowchart of a 1/128 interrupt (reference timer interrupt) corresponding to a value i of Sin- itr.

FIG.10 is a view showing a flowchart of an edge interrupt.

FIG.11 is a view showing a flowchart of a 21.71 mS interrupt.

FIG.12 is a view showing a flowchart used when a command number of revolution to an engine is changed.

FIG.13 is a view showing such a tendency that, in a permanent magnet type multipolar generator, an output voltage or an output power is lowered as a temperature is increased.

FIG.14 is a view explaining that it takes time to increase the number of revolution of the engine in response to a sharp increase of the load.

FIG.15 is a view showing respective characteristics in an echo-mode and a power mode.

Mode for Carrying Out the Invention

FIG.1 shows a configuration of one embodiment of the present invention.

In FIG. 1, a reference numeral 100 denotes an inverter unit, 200 denotes a permanent magnet type multipolar generator (Permanent Magnet Alternator-PMA), 300 denotes an engine, 500 denotes an inverter control power source, and 550 denotes a power mode switch that is used to indicate a driving mode.

101 denotes an inverter portion, 102 denotes an inverter module, 103 denotes a rectifier circuit portion, 104 denotes an inverter circuit portion (H bridge), 105 denotes an electrolytic capacitor portion, 106 denotes an internal voltage sensor that constitutes a DC link voltage detecting circuit described later, 107 denotes a temperature sensor, 108 denotes a current sensor, 109 denotes a smoothing filter portion, 110 denotes a control circuit that is configured by a one-chip microcomputer, 111 denotes a communication line that transmits/ receives information between control circuits 110A, 110B, 150 denotes an inverter control power source, and 160 denotes a revolution command adaptor that is used to indicate a revolution of the engine (or the generator).

301 denotes an engine control unit (ECU). In this case, the permanent magnet type multipolar generator 200 shown herein is of the permanent magnet field type. Although not clearly shown in the illustrated case, this multipolar generator is equipped with two sets of generator windings, and outputs of respective generator windings are supplied to inverter portions 101A, 101B that are provided to correspond individually.

An output terminal of an inverter circuit portion 104A and an output terminal of an inverter circuit portion 104B are connected in series. An output terminal A, an output terminal B, and an output terminal C are configured to constitute the so-called single-phase three-wire system. As a consequence, an AC voltage V can be output between the output terminal A and the output terminal B or between the output terminal B and the output terminal C respectively. Further, an AC voltage 2V can be output between the output terminal A and the output terminal C.

Here, a voltage waveform 600 shown in FIG.1 denotes a PWM waveform as a waveform that appears at output portions of the inverter circuit portions 104A, 104B respectively. A voltage waveform 601 denotes a waveform indicating a sine wave obtained when the PWM waveform 600 is smoothed by the smoothing filter portion 109 respectively.

As shown in FIG.1, a subject of the present invention is such a configuration that the outputs are obtained from the multipolar generator 200 having two sets of generator windings, then an AC output is produced from the outputs by the inverter portions 101A, 101B respectively, and then the output terminals are connected to constitute the single-phase three-wire system as illustrated.

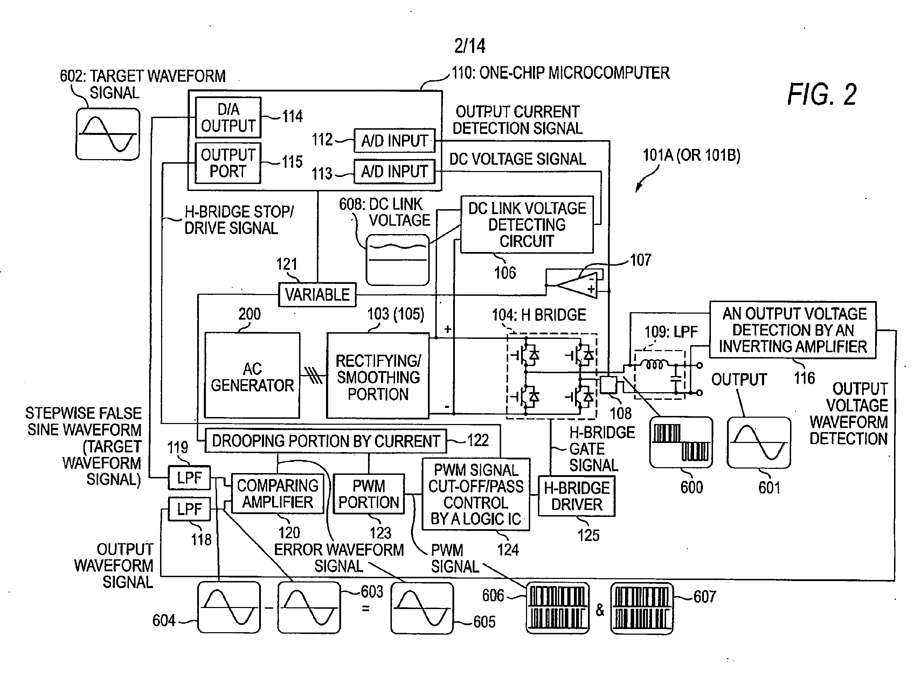

FIG.2 shows a configuration that drives/controls one of the inverter portions shown in FIG.1. In FIG.2, a portion corresponding to the communication line 111 shown in FIG.1 is omitted.

The reference numerals 101, 103, 104, 105, 106, 108, 109, 110, 200, 600, and 601 in FIG.2 correspond to those in FIG.1.

A reference numeral 112 denotes an input port portion that receives an output current detection signal from the current sensor 108, and converts an analog signal into a digital signal. 113 denotes an input port portion that receives a DC voltage signal (DC link voltage signal) from the DC link voltage detecting circuit 106 as the internal voltage sensor, and converts an analog signal into a digital signal.

The control circuit (one-chip microcomputer) 110 generates a target waveform signal 602 to an AC voltage that is to be output from the inverter circuit portion (H bridge) 104, and then outputs the target waveform signal 602 from an output port portion 114 that executes a digital-analog conversion.

The control circuit 110 outputs control signals (H-bridge stop/drive signals shown in FIG.2) for stopping the inverter circuit portion (H bridge) 104 and the like from an output port 115 based on an overcurrent state sent from the inverter circuit portion (H bridge) 104, and controls a PWM signal cut-off/pass portion 124 described later. Further, the control circuit 110 sends to a variable indicator portion 121 shown in FIG.2 a control signal for executing the control under the driving condition (e.g., the driving condition in which the voltage waveform 600 (or 601) on the output side is temporarily lowered, or the like) given by the inverter circuit portion 104 (H bridge) to control a "drooping portion by current" 122 shown in FIG.2, thereby controlling a PWM signal being output from a PWM portion 123 shown in FIG.2. Here, 107 shown in FIG.2 denotes an inverting amplifier.

"An output voltage detecting portion 116 by an inverting amplifier" shown in FIG.2 extracts the waveform 600 shown in FIG.2. This waveform 600 is converted into a sine waveform 603 (basically, same as the waveform 601) via a low-pass filter (LPF) 118. Meanwhile, a target waveform signal 602 shown in FIG.2 is converted into a sine waveform 604 via a low-pass filter 119. Both sine waveforms 603, 604 are compared mutually by a comparing amplifier 120, and then an error waveform signal 605 is input into the above "drooping portion by current" 122.

The "drooping portion by current" 122 has a crest limiting function to limit a waveform height of the error waveform signal 605, and sends a signal to the PWM portion 123 shown in FIG.2. Needless to say, the "drooping portion by current" 122 executes the control to lower temporarily the output voltage of the inverter portion such that the driving condition given by the inverter circuit portion (H bridge) 104 should be satisfied, or the like, as described above, and adjusts an amplitude of the error waveform signal 605.

The PWM portion 123 shown in FIG.2 generates the PWM signal having a desired waveform, and sends this PWM signal to a "PWM signal cut-off/pass (ON/OFF) controlling portion by a logic IC" 124. This PWM signal cut-off/pass controlling portion 124 executes the cut-off/pass control of the PWM signal after this portion receives the instruction given by the above "H-bridge stop/drive signals", and supplies the PWM signal to a H-bridge driver 125 shown in FIG. 2. The H-bridge driver 125 controls respective FETs in the inverter circuit portion 104 based on this PWM signal. The waveforms indicated by reference numerals 606 and 607 shown in FIG.2 show the control signals used to control respective FETs (respective FETs are controlled by the waveform of the PWM signal). A waveform 608 shown in FIG. 2 is a DC link voltage, and is shown such that this waveform includes a ripple.

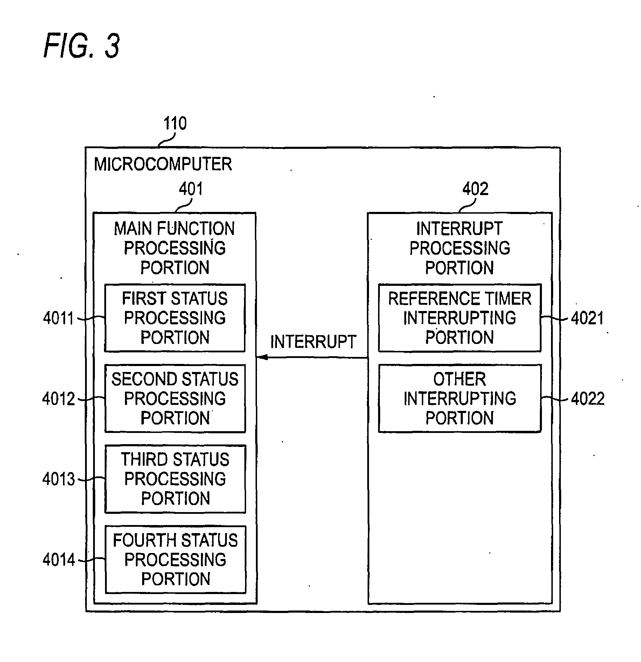

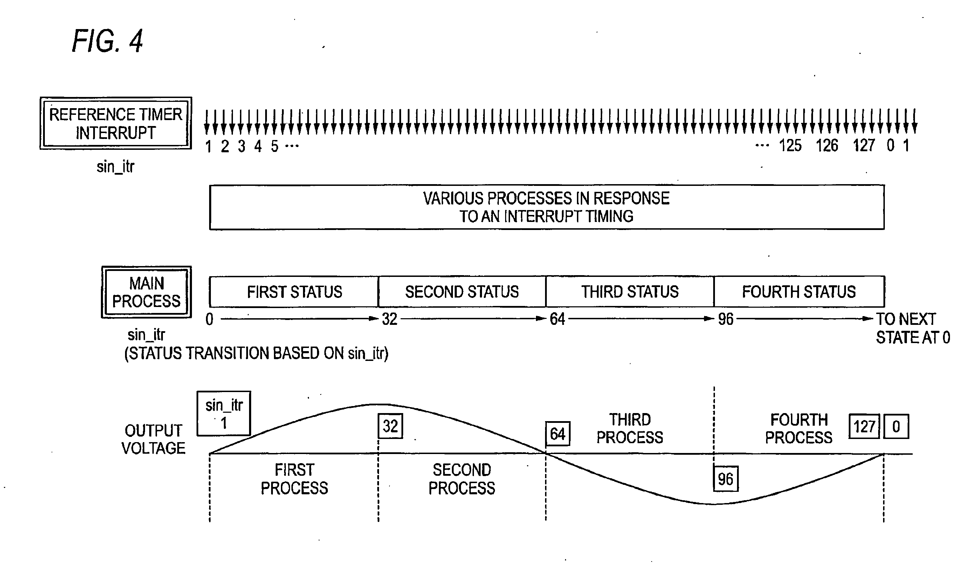

FIG.3 shows a processing configuration in the control circuit (one-chip microcomputer). FIG.4 shows timings at which the processes are executed in the control circuit (one-chip microcomputer).

The control circuit 110 includes a main function processing portion 401, and an interrupt processing portion 402. The main function processing portion 401 has a first status processing portion 4011, a second status processing portion 4012, a third status processing portion 4013, and a fourth status processing portion 4014. The interrupt processing portion 402 has a reference timer interrupting portion 4021, and another interrupting portion 4022. The control circuit 110 causes the main function processing portion 401 and the interrupt processing portion 402 to monitor the inverter portion 101 and control the driving circuit and to execute the necessary processes.

As shown in FIG.4, the main function processing portion 401 executes first to fourth processes for detecting, outputting and controlling a status of the inverter portion in first period to forth periods (corresponding to a first status to a fourth status shown in FIG.4) that are set by dividing equally one period of an AC voltage as the output of the inverter portion into four equal periods. The first to fourth processes are different from each other. In this example, the first to fourth processes are executed in the first to fourth processes respectively, but any process may be executed in any period. That is, any operation mode may be employed if any one of the first to fourth processes may be executed in the first to fourth processes respectively.

Actually, in order to divide equally one period of the AC voltage into four equal parts, the main function processing portion 401 utilizes an interrupt generated at respective timings that are obtained when one period of the AC voltage is divided equally into N (in this example, N=128) by the reference timer interrupting portion 4021 in the interrupt processing portion 402. That is, the number of interrupts is counted, and the first to fourth periods are started respectively when the count value corresponds to 1, 32, 64, and 96.

The first status processing portion 4011 shown in FIG.3 executes the process in the first status period shown in FIG.4, the second status processing portion 4012 executes the process in the second status period shown in FIG.4, the third status processing portion 4013 executes the process in the third status period shown in FIG.4, and the fourth status processing portion 4014 executes the process in the fourth status period shown in FIG.4.

The first status is started when the contents Sin-itr of the reference timer counter (not shown) is a value "1", the second status is started when the contents Sin-itr is a value "32", the third status is started when the contents Sin-itr is a value "64", and the fourth status is started when the contents Sin-itr is a value "96". Then, the counted value is repeated such that the contents change to the value "1" from the value "127" via the value "0". In this case, the content Sin-itr of the reference timer counter (not shown) is updated in synchronism with the sine wave of the output voltage, as shown in FIG.4.

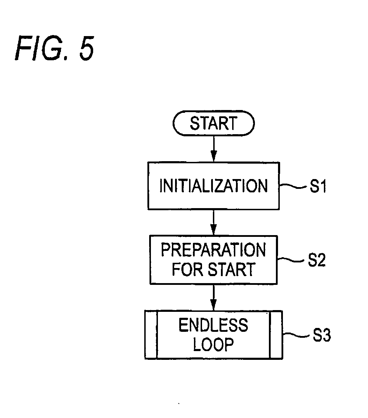

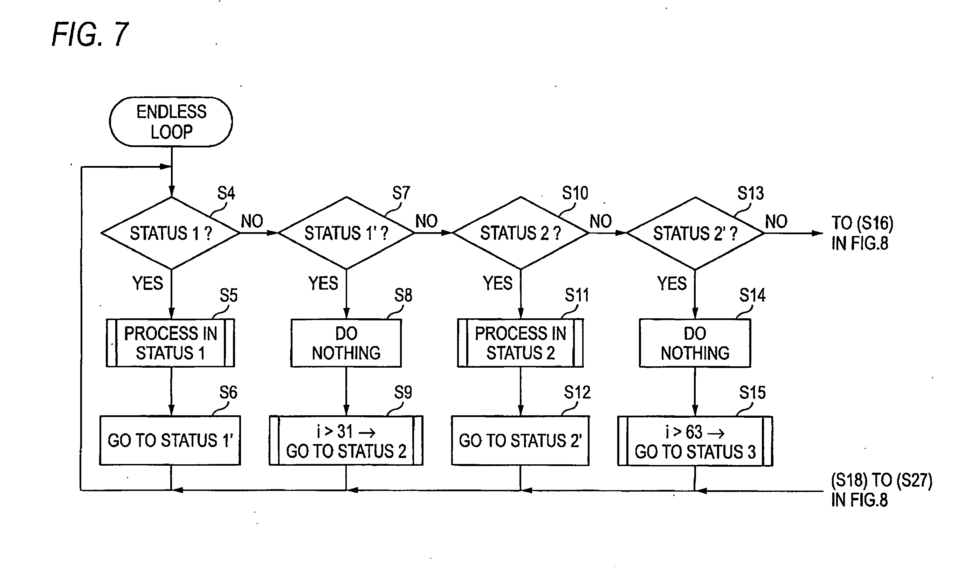

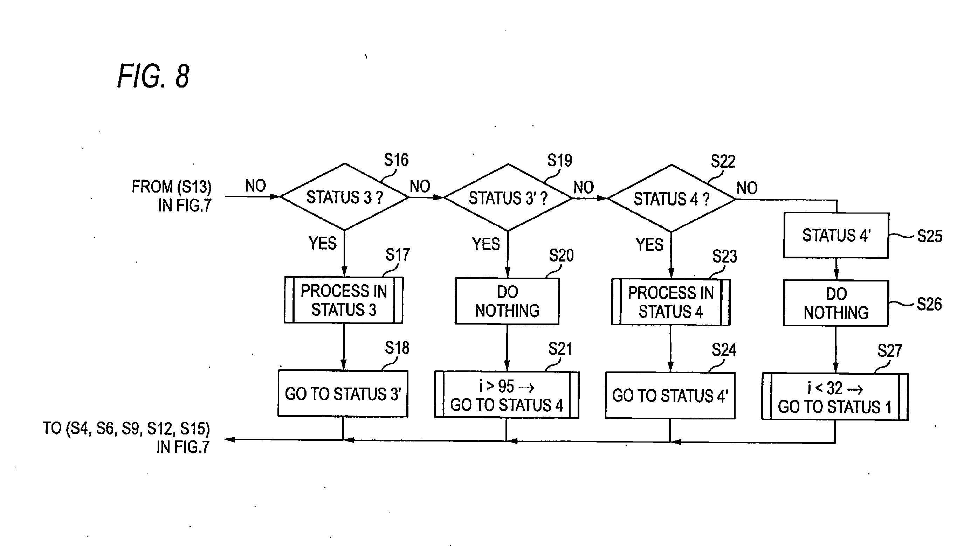

FIG.5, FIG.6, FIG.7, and FIG.8 show the processed contents that the control circuit (one-chip microcomputer) executes in response to above four statuses. Here, FIG.7 and FIG.8 when coupled together shows on figure.

FIG.5 shows a flowchart used to start an endless loop.

(S1): execute the initialization.

(S2): execute the preparation for start.

(S3): enter into an endless loop.

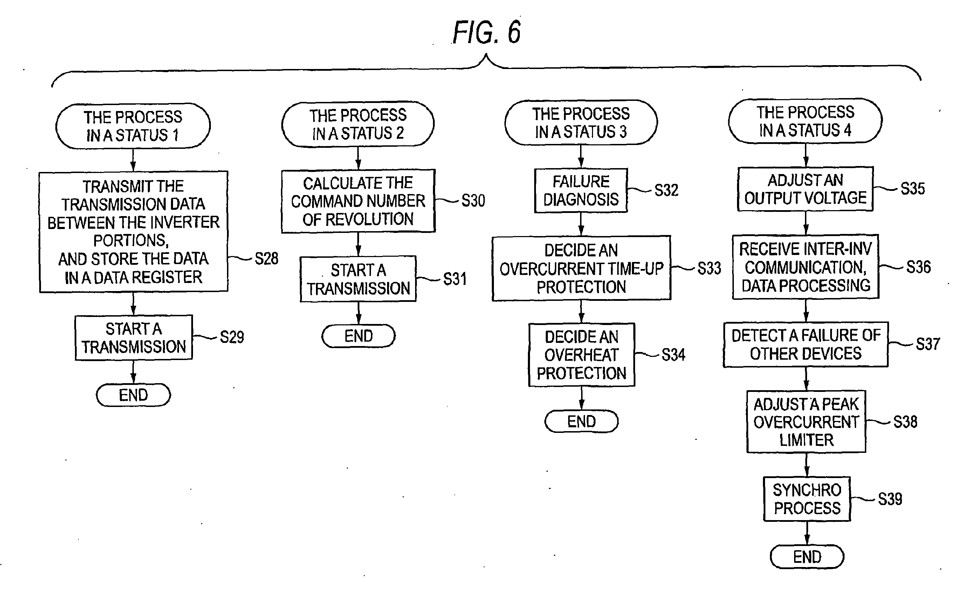

FIG.6 shows the process contents in the status 1 to the status 4 that are executed in response to the endless loop.

In the process in the status 1,

(S28): store the transmission data transmitted between the inverter portion M (master) 101A and the inverter portion S (slave) 101B shown in FIG.1 in the register. The effective power and the reactive power output by each inverter portion are contained in the transmission data. A mode in which the effective power and the reactive power are generated will be described later.

(S29): start the transmission. That is, the transmission data stored in (S28) are sent out to the inverter portion on the opposite side.

In the process in the status 2,

(S30): calculate the command number of revolution for the engine.

(S31): start the transmission of the number of revolution. The number of revolution is transmitted to the engine control unit (ECU) 301 shown in FIG.1.

In the process in the status 3,

(S32): do the failure diagnosis in the inverter portion.

(S33): check a time in which an overcurrent continues when the inverter portion is in an overcurrent state, and then decide whether or not protection is needed when the time is up.

(S34): decide whether or not an overheat protection is needed, based on the detected data of the temperature sensor 107 shown in FIG.1.

In the process in the status 4,

(S35): perform an adjustment such as a change of the output voltage, or the like, as occasion demands.

(S36): execute the process of the data received from the opposite side in the communication between the control units of respective inverter portions.

(S37): detect the failure when the failure is caused on the other device.

(S38): perform an adjustment such as a change of a peak value of the overcurrent limiter, or the like.

(S39): perform a synchronizing process such that synchronization of the frequency (phase) should be executed between both inverter portions, as occasion demands.

FIG.7 and FIG.8 are coupled together to show one figure, and show the processed contents in the endless loop.

(S4): check whether or not the output of the inverter portion is in the status 1.

(S5): execute the processes of the status 1 shown in FIG.6 if the output of the inverter portion is in the status 1.

(S6): go to the status 1' shown in FIG.6 when the processes of the status 1 are ended.

(S7): check whether or not the output of the inverter portion is in the status 1' either if the check in (S4) is N or when the process in (S6) is ended.

(S8): do nothing and go to (S9) if the output of the inverter portion is in the status 1'.

(S9): go to the status 2 if a value i in the contents of the above counter (Sin-itr) is in excess of "31".

(S10): check whether the output of the inverter portion is in the status 2 either if the check in (S7) is N or when the process in (S9) is ended.

(S11): execute the processes of the status 2 shown in FIG.6 if the output of the inverter portion is in the status 2.

(S12): go to the status 2'.

(S13): check whether the output of the inverter portion is in the status 2' either if the check in (S10) is N or when the process in (S12) is ended.

(S14): do nothing and go to (S15) if the output of the inverter portion is in the status 2'.

(S15): go to the status 3 if the value i is in excess of "63".

(S16): check whether the output of the inverter portion is in the status 3 either if the check in (S13) is N or when the process in (S15) is ended.

(S17): execute the processes of the status 3 shown in FIG.6 if the output of the inverter portion is in the status 3.

(S18): go to Status 3'.

(S19): check whether the output of the inverter portion is in the status 3' either if the check in (S16) is N or when the process in (S18) is ended.

(S20): do nothing and go to (S21) if the output of the inverter portion is in the status 3'.

(S21): go to the status 4 if the value i is in excess of "95".

(S22): check whether the output of the inverter portion is in the status 4 either if the check in (S19) is N or when the process in (S21) is ended.

(S23): execute the processes of the status 4 shown in FIG.6 if the output of the inverter portion is in the status 4.

(S24): go to Status 4'.

(S25): the output of the inverter portion is in the status 4' either if the check in (S22) is N or when the process in (S24) is ended.

(S26): do nothing and go to (S27) if the output of the inverter portion is in the status 4'.

(S27): return to (S4) under the condition that the value i is smaller than "32".

As can be seen from FIG.7 and FIG.8, the endless loop repeats the processes of the status 1 to the processes of the status 4 in response to the value i of Sin-itr. That is, the processes in respective statuses are executed in one period (i=0 to i=127) of the voltage, and then are repeated.

Here, a mode in which the control circuit (one-chip microcomputer) 110 generates a value of the effective power P and a value of the reactive power Q output by the own inverter portions and also a value of the output current output from the own inverter portions will be explained conceptually hereunder.

As described above, the control circuit (one-chip microcomputer) 110 generates the target waveform signal 602 that is consistent with the output voltage being output from the inverter portion 101. The control circuit (one-chip microcomputer) 110 causes the reference timer interrupting portion 4021 shown in FIG.3 to generate an interrupt at the timings that are produced by dividing equally one period of the output voltage of the inverter portion (i.e., one period of the target waveform signal 602) into 128 equal parts, as shown in FIG.4.

In view of the above, the control circuit (one-chip microcomputer) 110 can sample the output voltage v sin ωt of the inverter portion n times (128 times) in one period, and can generate a sampling value v sin (n) at respective timings. The control circuit (one-chip microcomputer) 110 can generate a sampling value v cos (n) corresponding to a value v cos ωt that is derived by shifting the phase of the output voltage v sin ωt by π/2.

In this case, the sampling value v sin (n) can be prepared in advance when the output voltage of the inverter portion is decides. These values may be set on a table on a memory, for example. The value v sin (n) and the value v cos (n) can be extracted to meet the timings of respective values i=n of Sin-itr.

Meanwhile, as described above, the control circuit (one-chip microcomputer) 110 causes the current sensor 108 to detect the output current from the inverter portion 101, as shown in FIG.2. The detected output current is converted into a digital signal by the input port portion 112 shown in FIG.2, and then is fetched into the control circuit (one-chip microcomputer) 110 at every interrupt timing of the interrupt (1/128 interrupt) given by the above the reference timer interrupting portion 4021.

Here, needless to say, a DC link voltage from the DC link voltage detecting circuit 106 shown in FIG.2 is also fetched into the control circuit (one-chip microcomputer) 110 at every interrupt timing via the input port portion 113 shown in FIG.2.

The values of the output currents that are fetched sequentially via the input port portion 112 shown in FIG.2 are instantaneous values i(n) of the output current i at respective sampling timings.

Conceptually, the effective power P of the inverter portion is given when

$$v \sin (n) \times i(n)$$

is integrated in one period of the voltage and then is averaged over a plurality of periods. The reactive power Q of the inverter portion is given when

$$v \cos (n) \times i(n)$$

is integrated in one period of the voltage and then is averaged over a plurality of periods.

The output current I of the inverter portion is given when the i(n) is integrated in one period of the voltage.

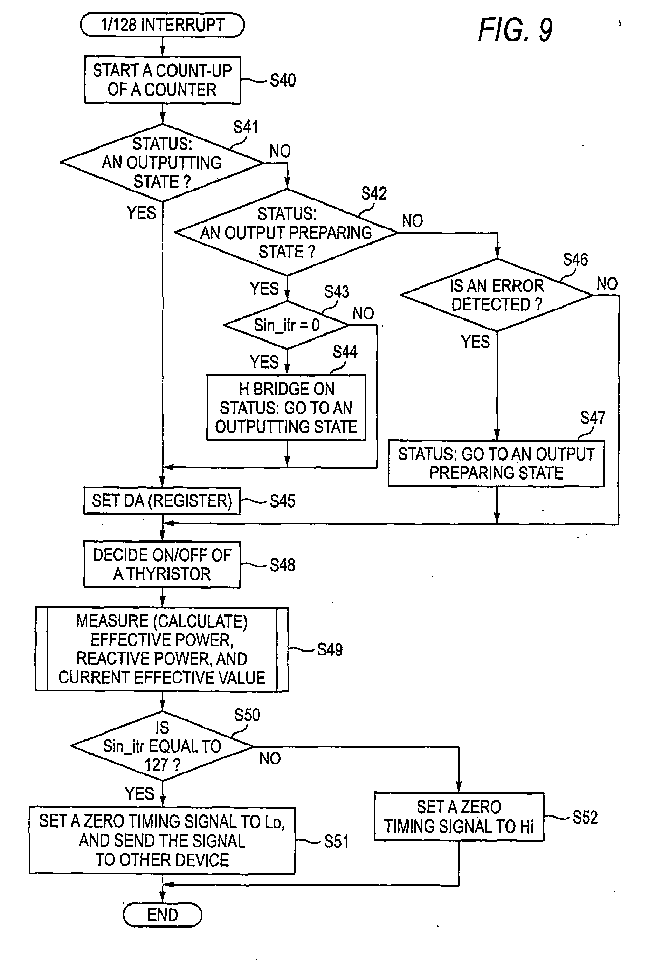

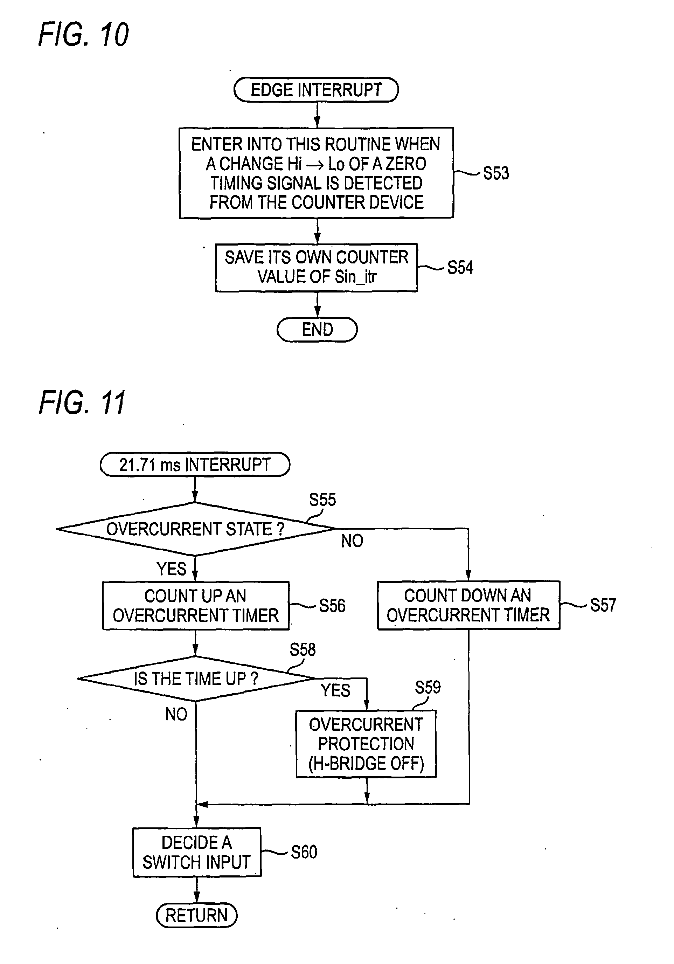

As the interrupt in the control circuit (one-chip microcomputer) 110, a 1/128 interrupt (reference timer interrupt) shown in FIG.9, an edge interrupt shown in FIG. 10, and a 21.71 ms interrupt shown in FIG. 11 are considered.

FIG.9 shows a flowchart of a 1/128 interrupt (reference timer interrupt) corresponding to the value i of the above Sin-itr.

In FIG.9,

(S40): the counter that gives the value i of Sin-itr is counted up to "1",..., from "0" via "127".

(S41): check whether the processes corresponding to the status 1 to the status 4 shown in above FIG.6 are being output.

(S42): check whether the output of the responding status (any one of the status 1 to the status 4) is being prepared now if the check in (S41) is N.

(S43): check whether the value i is "0" if the check in (S42) is Y. Go to (S44) if the check in (S43) is Y. Go to (S45) if the check in (S43) is N.

(S44): bring the H bridge constituting the inverter circuit portion 104 into the ON state. That is, set the inverter circuit portion 104 to a state in which this inverter circuit portion can generate the output.

(S45): set the value of the counter (i.e., the value i) in (S40) in a D/A register.

(S46): check whether an error is contained in the inverter portion if the check in (S42) is N, i.e., the status output is a standby state. Go to (S47) if the check in (S46) is Y. Go to (S48) if the check in (S46) is N.

(S47): go to an output preparing state of the corresponding status.

(S48): decide whether a thyristor existing in the rectifier circuit portion 103 shown in FIG.1 should be turned ON or OFF, in the process in this (S48). That is, maintain the DC voltage detected by the internal voltage sensor 106 shown in FIG. 1 (i.e., the DC voltage at the output end of the rectifier circuit portion 103) at a predetermined value as much as possible by turning ON or OFF the thyristor in response to the decision result.

(S49): generate sequentially

$$v \sin(n) \times i(n)$$

$$v \cos(n) \times i(n)$$

i(n)

in response to the value i of the above Sin-itr. Then, these values are utilized to calculate the effective power P, the reactive power Q, and the output current I.

(S50): check whether the value i of the above Sin-itr is equal to "127". Go to (S51) if the check in (S50) is Y. Go to (S52) if the check in (S50) is N.

(S51): the control circuit (one-chip microcomputer) 110 transmits the phase of the output voltage from its own inverter portion (a zero-loss timing at which the output voltage goes to a plus side from a zero level) to other inverter portion if the check in (S50) is Y. That is, a zero timing signal described later is converted from a Hi state to a Lo state. This conversion is transmitted to other inverter portion via the communication line 111 shown in FIG.1.

(S52): change the above zero timing signal to a Hi state or maintain this zero timing signal at a Hi state if the check in (S50) is Y.

FIG.10 shows a flowchart of an edge interrupt.

This edge interrupt is generated when such an event is detected that the zero timing signal of other inverter portion (opposite device) is changed from a Hi state to a Lo state in response to the process in (S51) in FIG.9.

(S53): enter into this interrupt routine when the zero timing signal of other inverter portion is changed from a Hi state to a Lo state.

(S54): save the counter value (value i) of Sin-itr in its own inverter portion (own device) in this interrupt routine.

Here, the process corresponding to this edge interrupt is utilized to decide whether the synchronizing process should be executed between the inverter portions mutually in (S39) in the process of the status 4 shown in FIG.6.

FIG.11 shows a flowchart of a 21.71 mS interrupt.

This 21.71 ms interrupt is generated in response to the count up of the timer that counts 21.71 ms, irrespective of the timing of the above Sin-itr.

(S55): check whether the inverter portion is in an overcurrent state.

(S56): count up an overcurrent timer if the check in (S55) is Y.

(S57): count down the overcurrent timer if the check in (S55) is N.

(S58): check whether the time being set on the overcurrent timer is up.

(S59): execute an overcurrent protection if the check in (S58) is Y. That is, the H-bridge OFF in the inverter circuit portion 104 is brought into an OFF state (state in which the output is set to zero).

(S60): make a "switch input decision" next to the timing at which the process in (S58) or (S59) is executed. That is, check whether the power mode switch 550 shown at the lower right of FIG.1 is in its ON state or its OFF state. In this case, it may be considered that, in the situation that the power mode switch 550 is turned ON, the load connected to the inverter portion requests the current that has to increase sharply. This power mode switch 550 is the switch that is turned ON or OFF manually by the driver.

The revolution control of the engine in the inverter generator will be described hereunder.

(A) Setting of the command number of revolution for the engine

In the conventional case, in the inverter generator disclosed in above JP-A-2005-286540 official gazette, for example, two inverter portions are connected in parallel to feed an electric power to the common load.

Meanwhile, in the inverter generator of this type, the engine is rotated at the number of revolution that is suited substantially to the load (the load connected to the inverter portion) so as to save a fuel consumption, to suppress a noise, or the like. Here, this situation is made possible because the inverter portions are used and because a frequency of the output voltage of the inverter portion is not influenced by the number of revolution of the engine (further speaking, the frequency of the AC voltage that the permanent magnet type multipolar generator driven by the engine outputs).

Accordingly, in case the inverter portions are driven in parallel, the command number of revolution for the engine is decided by the equation

$$\text{Command number of revolution}=(k/2)\{(\text{effective power of } P_M)+(\text{effective power of } P_S)\} \text{ (where k is a coefficient, } P_M \text{ is one inverter portion, and } P_S \text{ is the other inverter portion)}.$$

That is, the command number of revolution for the engine is decided based on average values of respective effective powers from two inverter portions as an index. Needless to say, the number of revolution of the engine is set to increase as these average values are increased.

However, like the case of the present invention, in case the output terminals of two inverter portions are connected in series and then the inverter portions are driven, the load connected between the output terminals A-B shown in FIG.1 and the load connected between the output terminals B-C may become extremely unbalanced. In particular, in case the electric motor is connected to the loads, such a supply of the larger output current may be required for one inverter portion as a start current.

From the above event, in the present invention, for example, in the control circuit (one-chip microcomputer) 110 that corresponds to one inverter portion, the command is given to the engine control unit (ECU) 301 by

$$P=(\text{value on the larger side of } P_m \text{ or } P_s)$$

where Pm is the effective power of its own inverter portion, and
$P_s$ is the effective power sent from the opposite side.
That is, the command number of revolution decided by an equation
Reference command number of revolution=$k_1.P$ (where k1 is a coefficient)
is given as the reference command number of revolution.
(B) Command number of revolution for the engine corresponding to the characteristics of the permanent magnet type multipolar generator

As described in the above (A), the reference command number of revolution for the engine is instructed basically. In this case, there are the problems described as follows.

That is, since the permanent magnet is employed as the magnetic field, the permanent magnet type multipolar generator has such a characteristic that the output voltage of the generator is lowered when an ambient temperature is high, particularly when a heat is generated. For this reason, while considering such a condition that the permanent magnet type multipolar generator can feed the power that satisfies the temporary output power required for the inverter portion even when the ambient temperature is high, particularly even when the generator is heated, the value of the reference command number of revolution of the engine is set a little higher in the normal state.

When the present invention is viewed from another aspect, this situation yields the result that, when an ambient temperature is relatively low or when a heat is not generated, the value of the reference command number of revolution for the engine could be set to a lower value, thereby suppressing the noise generated from the engine.

In the present invention, while taking this aspect into account, the value of the reference command number of revolution for the engine should be set to a lower value in the normal time, and then the value of the command number of revolution for the engine should be enhanced at a time when there is shown such a tendency that the output voltage from the permanent magnet type multipolar generator is lowered, as described above.

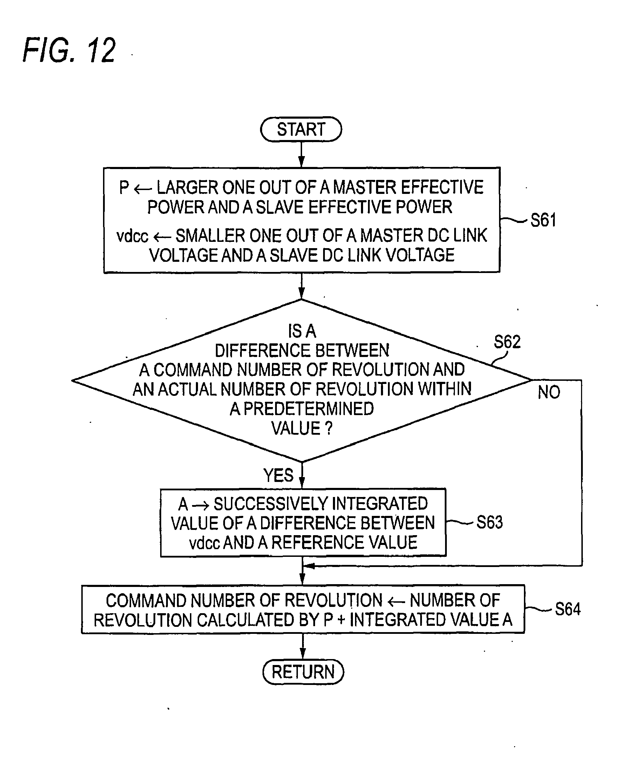

FIG.12 shows a flowchart used when the command number of revolution for the engine is changed.

In FIG.12,
(S61): a larger one out of the effective power $P_m$ being output from its own inverter portion and the effective power $P_s$ sent from the opposite side is assumed as P. a smaller one out of the DC link voltage Vdcm of its own inverter portion and the DC link voltage Vdcs of the opposite side link is assumed as Vdcc.

(S62): check whether the actual number of revolution of the engine at a present time has been different extremely from the command number of revolution. Go to (D64) if the check in (S62) is N.

(S63): the case where the check in (S62) is Y means that the engine is running at a desired number of revolution. In this state, check whether the DC link voltage shown in FIG.2 has been lowered. Needless to say, the situation "the DC link voltage is lowered if the check in (S62) is Y" means the permanent magnet type multipolar generator cannot provide a desired DC voltage because an output from this multipolar generator is slightly lowered. Based on this fact, as to the DC link voltage,

$$\text{(reference value)} - \text{(lower value of the DC link voltage value Vdcc)}$$

is calculated, and this calculated value is successively integrated in (S63). This integrated value is held as A.

$$\text{(S64): (corrected reference command number of revolution)} = k_2 \cdot P + A \quad \text{(where } k_2 \text{ is a coefficient that is smaller than the above } k_1 \text{)}$$

is given as the corrected reference command number of revolution for the engine.

By adopting the above approach, while the noise is suppressed in the normal condition by setting the reference number of revolution to the value that is lower than the reference being set in the above column (A), such a measure is taken in advance to prevent output of the permanent magnet type multipolar generator from being lowered.

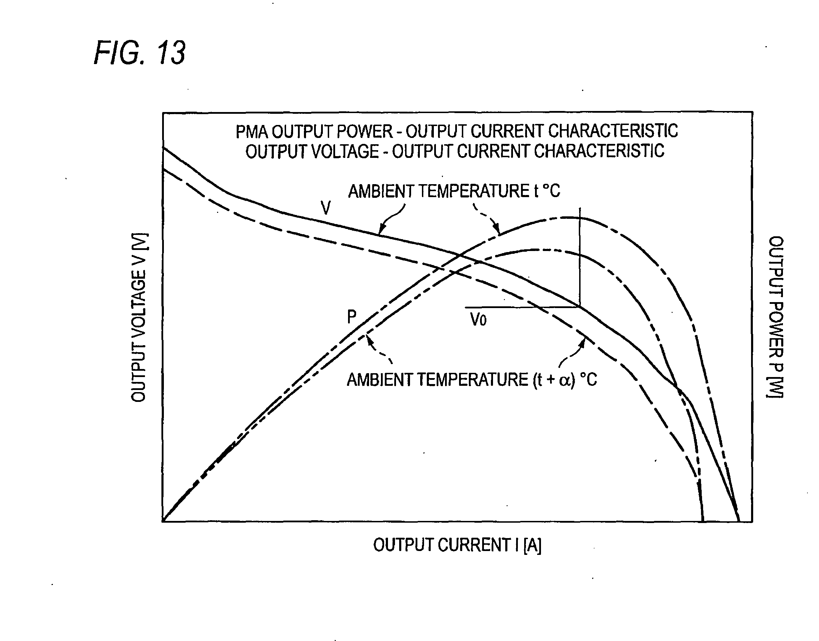

Here, FIG.13 shows such a tendency that, in the permanent magnet type multipolar generator, an output voltage or an output power is lowered as a temperature is increased.

(C) Setting of the command number of revolution responding to the power mode

As described above, in the inverter generator, when the load connected to the inverter portion is small, the command number of revolution of the engine is set lower to decrease a fuel consumption of the engine or suppress an occurrence of the noise.

Such a measure is considered and taken to increase the number of revolution of the engine as soon as possible even when the load on the inverter portion side is sharply increased in the situation that the number of revolution is set lower.

However, sometimes it takes too much time to increase the number of revolution of the engine, and thus the output voltage from the inverter portion is excessively lowered. In particular, according to the property of the load, it is undesirable for some load that the output voltage is decreased.

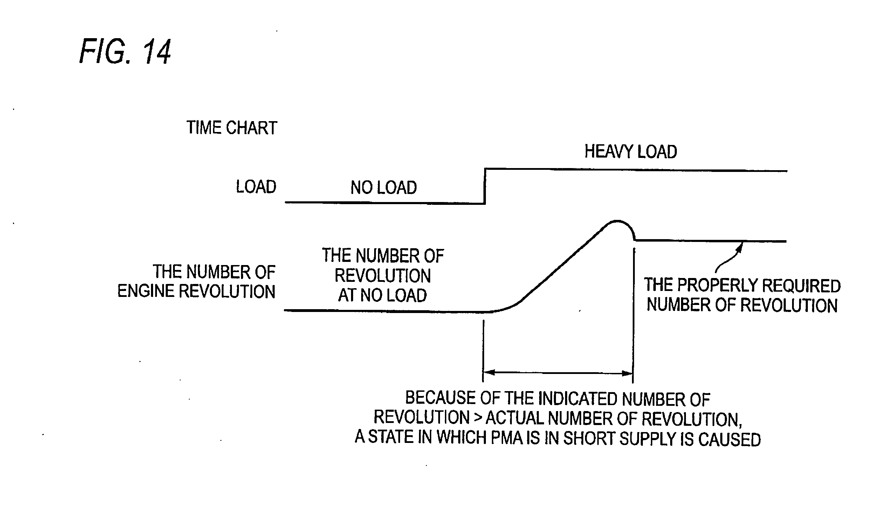

FIG.14 is a view explaining that it takes time to increase the number of revolution of the engine in response to a sharp increase of the load.

In FIG.14, an abscissa denotes a time, and ordinates denote a load and the number of engine revolution respectively.

FIG.14 shows the case where the load is shifted from a no load state to a heavy load state, and it takes much time to increase the number of revolution.

According to the present invention, in order to solve this problem, the operator can manually instruct the mode where the inverter generator is driven in a power mode and the mode where the inverter generator is driven in an echo mode.

The power mode switch 550 shown in FIG.1 (at the lower right of FIG. 1) is the switch that is used to instruct this power mode.

According to the property of the load connected to the inverter portion, in case the situation that the load of the inverter portion is sharply increased may occur and also the condition that the output voltage of the inverter portion is excessively decreased is undesirable in such situation, the power mode switch 550 is manually set to its ON state in advance.

That is, as described above, when the load of the inverter portion is small, the number of revolution of the engine should be set as small as possible. However, when the power mode switch 550 is turned ON in advance, the number of revolution of the engine is set slightly higher in the normal mode, and thus a margin is provided for a power of the engine.

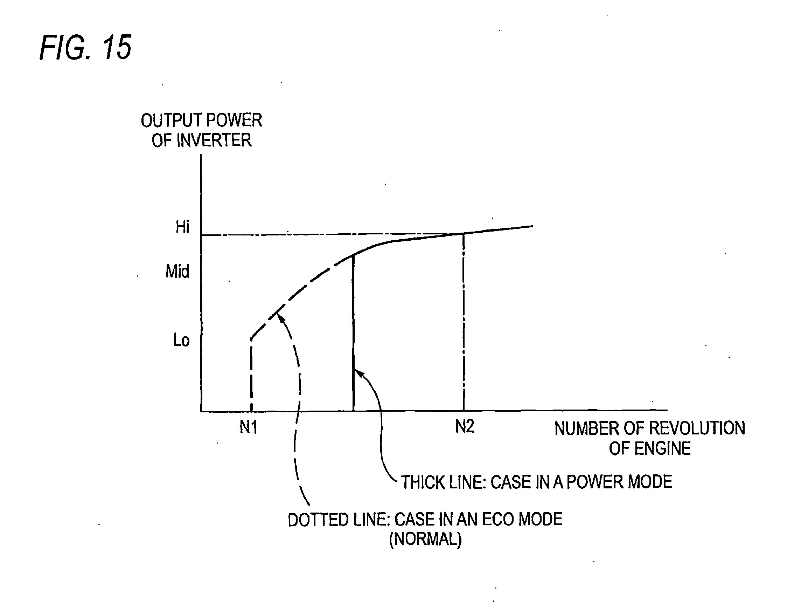

FIG.15 shows respective characteristics in the echo-mode and the power mode.

In FIG.15, an abscissa denotes the number of revolution of the engine, and an ordinates denotes the output power of the inverter. A solid line indicates the case in the power mode, and a dotted line indicates the case in the eco mode.

In the case of the echo mode, the number of revolution of the engine is set to $N_1$ rpm within a range of the output power of the inverter portion from a level "0" to a level "Lo", for example, and then the number of revolution of the engine is increased in response to a magnitude of the level that is in excess of a level "Lo".

On the contrary, in the case of the power mode, the number of revolution of the engine is set to around $N_2$ rpm within a range of the output power of the inverter portion from a level "0" to a level "Mid", for example, and then the number of revolution of the engine is increased in response to a magnitude of the level that is in excess of a level "Mid".

When the power mode switch is turned ON, the number of revolution of the engine is held in a relatively high state under the condition that the output power of the inverter portion is small. Therefore, the engine is able to prepare in advance for a sharp increase of the output power of the inverter portion.

As a supplementary explanation, the control "the number of revolution of the engine is changed in response to the load" makes it possible not only to enhance a driving efficiency of the engine but also to provide the effective driving conditions in the permanent magnet type generator and the inverter portion.

Industrial Applicability

As explained above, according to the present invention, in the inverter generator, a lack of the power being fed to the inverter portions from the engine side respectively can be prevented even though the load becomes unbalanced between a plurality of inverter portions, and the like, and the number of revolution of the engine can be controlled irrespective of a magnitude of the load.

Description of Reference Numerals and Signs

> 100: inverter unit
> 200: permanent magnet type multipolar generator
> 300: engine
> 301: engine control unit (ECU)
> 500: inverter control power source
> 550: power mode switch
> 101 : inverter portion
> 102: inverter module
> 103: rectifier circuit portion
> 104: inverter circuit portion (H bridge)
> 105: electrolytic capacitor portion
> 106: internal voltage sensor (DC link voltage detecting circuit)
> 107: temperature sensor
> 108: current sensor
> 109: smoothing filter portion
> 110: control circuit (one-chip microcomputer)
> 112: input port portion
> 113: input port portion
> 114: output port portion
> 115: output port portion
> 116: output voltage detecting portion
> 118: low-pass filter
> 119: low-pass filter
> 120: comparing amplifier portion
> 121: variable indicator portion
> 122: drooping portion by current
> 123: PWM portion
> 124: PWM signal cut-off/pass portion
> 125: H bridge driver
> 150: inverter control power source
> 160: revolution command adaptor
> 601: output voltage waveform
> 602: target waveform signal
> 605: error waveform signal

**Claims**

1.  An inverter generator comprising:

> an engine;
> an engine control unit having a function of controlling a number of revolution of the engine;

an AC generator rotated and driven by the engine; and

an inverter unit including at least two inverter portions to which an AC voltage induced in generator windings of the AC generator is fed respectively, wherein each of the inverter portions includes a rectifier circuit portion for rectifying the fed AC voltage to generate a DC voltage, a capacitor portion for smoothing the generated DC voltage, an inverter circuit portion to which the smoothed DC voltage is applied, and a smoothing filter portion for smoothing the AC voltage generated by the inverter circuit portion to get a sine AC voltage;

external output ends, respective output ends of the smoothing filter portions corresponding to at least two inverter portions being utilized as external output ends, and the output ends of the smoothing filter portions being connected in series to obtain a sum of output voltages of the respective inverter portions,

wherein each of the inverter portions includes:

an internal voltage sensor for detecting a magnitude of the smoothed DC voltage applied to the inverter circuit portion,
a current sensor for detecting an output current output from the inverter circuit portion, and
a control circuit to which the DC voltage detected by the internal voltage sensor is fed as a DC link voltage and to which the output current detected by the current sensor is fed, and

wherein the control circuit is configured to generate a target waveform signal corresponding to the output voltage output by the inverter portion, and is configured to calculate and utilize an effective power output from the inverter portion, and

wherein one of the inverter portions compares the effective power of the one of the inverter portions with the effective power of the other inverter portion and issues a reference command number of revolution corresponding to the effective power, a value of which is larger, to the engine control unit.

2. An inverter generator, comprising:

an engine;
an engine control unit having a function of controlling a number of revolution of the engine;
an AC generator rotated and driven by the engine; and
an inverter unit including at least two inverter portions to which an AC voltage induced in generator windings of the AC generator is fed respectively, wherein each of the inverter portions includes a rectifier circuit portion for rectifying the fed AC voltage to generate a DC voltage, a capacitor portion for smoothing the generated DC voltage, an inverter circuit portion to which the smoothed DC voltage is applied, and a smoothing filter portion for smoothing the AC voltage generated by the inverter circuit portion to get a sine AC voltage;

external output ends, respective output ends of the smoothing filter portions corresponding to at least two inverter portions being utilized as external output ends, and the output ends of the smoothing filter portions being connected in series to obtain a sum of output voltages of the respective inverter portions,

wherein each of the inverter portions includes:

an internal voltage sensor for detecting a magnitude of the smoothed DC voltage applied to the inverter circuit portion,
a current sensor for detecting an output current output from the inverter circuit portion, and
a control circuit to which the DC voltage detected by the internal voltage sensor is fed as a DC link voltage and to which the output current detected by the current sensor is fed, and

wherein the control circuit is configured to generate a target waveform signal corresponding to the output voltage that the concerned inverter portion is to output, and issues a command number of revolution, which is calculated based on an effective power output from the inverter portion, to the engine control unit,

wherein if a difference from the number of revolution of the engine is within a predetermined range, the control circuit calculates a difference between a lower value of respective DC link voltages of the inverter portions and a predetermined DC link reference voltage value, integrates the difference to a corrected number of revolution, and changes the command number of revolution, and

wherein if the difference between the number of revolution of the engine and the command number of revolution is not within the predetermined range, the control circuit issues the command number of revolution for the engine control unit without changing the command number of revolution.

3. An inverter generator, comprising:

an engine;

an engine control unit having a function of controlling a number of revolution of the engine;

an AC generator rotated and driven by the engine;

an inverter unit including at least two inverter portions to which an AC voltage induced in generator windings of the AC generator is fed respectively, wherein each of the inverter portions includes a rectifier circuit portion for rectifying the fed AC voltage to generate a DC voltage, a capacitor portion for smoothing the generated DC voltage, an inverter circuit portion to which the smoothed DC voltage is applied, and a smoothing filter portion for smoothing the AC voltage generated by the inverter circuit portion to get a sine AC voltage;

a power mode selecting unit to be operated by a user;

external output ends, respective output ends of the smoothing filter portions corresponding to at least two inverter portions being utilized as external output ends, and the output ends of the smoothing filter portions being connected in series to obtain a sum of output voltages of the respective inverter portions,

wherein each of the inverter portions includes a control circuit that generates a target waveform signal corresponding to the output voltage to be output by the inverter portion, and calculate an effective power output from the inverter portion to issue a command number of revolution of the engine to the engine control unit, and

the control circuit is configured to set variably the number of revolution of the engine based on the command issued from the power mode selecting unit.

FIG. 1

**2/14**

FIG. 2

602: TARGET WAVEFORM SIGNAL

110: ONE-CHIP MICROCOMPUTER

114 — D/A OUTPUT
115 — OUTPUT PORT
112 — A/D INPUT — OUTPUT CURRENT DETECTION SIGNAL
113 — A/D INPUT — DC VOLTAGE SIGNAL
101A (OR 101B)

H-BRIDGE STOP/ DRIVE SIGNAL

608: DC LINK VOLTAGE

DC LINK VOLTAGE DETECTING CIRCUIT — 106

107

121 — VARIABLE

200 — AC GENERATOR

103 (105) — RECTIFYING/ SMOOTHING PORTION

104: H BRIDGE

109: LPF

AN OUTPUT VOLTAGE DETECTION BY AN INVERTING AMPLIFIER — 116

OUTPUT — 601

108 — H-BRIDGE GATE SIGNAL

600

OUTPUT VOLTAGE WAVEFORM DETECTION

STEPWISE FALSE SINE WAVEFORM (TARGET WAVEFORM SIGNAL)

122 — DROOPING PORTION BY CURRENT

119 — LPF
118 — LPF

120 — COMPARING AMPLIFIER

123 — PWM PORTION

124 — PWM SIGNAL CUT-OFF/PASS CONTROL BY A LOGIC IC

125 — H-BRIDGE DRIVER

OUTPUT WAVEFORM SIGNAL

120 ERROR WAVEFORM SIGNAL
123 PWM SIGNAL

604 — 603 = 605

606 & 607

EP 2 346 158 A1

## FIG. 3

110

MICROCOMPUTER

401

**MAIN FUNCTION PROCESSING PORTION**

4011 — FIRST STATUS PROCESSING PORTION

4012 — SECOND STATUS PROCESSING PORTION

4013 — THIRD STATUS PROCESSING PORTION

4014 — FOURTH STATUS PROCESSING PORTION

INTERRUPT

402

**INTERRUPT PROCESSING PORTION**

REFERENCE TIMER INTERRUPTING PORTION — 4021

OTHER INTERRUPTING PORTION — 4022

## FIG. 4

REFERENCE TIMER INTERRUPT

↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓↓

1 2 3 4 5 ⋯      ⋯ 125 126 127 0 1

sin_itr

| VARIOUS PROCESSES IN RESPONSE TO AN INTERRUPT TIMING |
|---|

MAIN PROCESS

| FIRST STATUS | SECOND STATUS | THIRD STATUS | FOURTH STATUS |
|---|---|---|---|

0 ——————→ 32 ——————→ 64 ——————→ 96 ——————→ TO NEXT STATE AT 0

sin_itr
(STATUS TRANSITION BASED ON sin_itr)

OUTPUT VOLTAGE

sin_itr 1    32    64   THIRD PROCESS   FOURTH PROCESS   127 0

FIRST PROCESS    SECOND PROCESS    96

EP 2 346 158 A1

*FIG. 5*

START

INITIALIZATION — S1

PREPARATION FOR START — S2

ENDLESS LOOP — S3

*FIG. 6*

THE PROCESS IN A STATUS 1

TRANSMIT THE TRANSMISSION DATA BETWEEN THE INVERTER PORTIONS, AND STORE THE DATA IN A DATA REGISTER — S28

START A TRANSMISSION — S29

END

THE PROCESS IN A STATUS 2

CALCULATE THE COMMAND NUMBER OF REVOLUTION — S30

START A TRANSMISSION — S31

END

THE PROCESS IN A STATUS 3

FAILURE DIAGNOSIS — S32

DECIDE AN OVERCURRENT TIME-UP PROTECTION — S33

DECIDE AN OVERHEAT PROTECTION — S34

END

THE PROCESS IN A STATUS 4

ADJUST AN OUTPUT VOLTAGE — S35

RECEIVE INTER-INV COMMUNICATION, DATA PROCESSING — S36

DETECT A FAILURE OF OTHER DEVICES — S37

ADJUST A PEAK OVERCURRENT LIMITER — S38

SYNCHRO PROCESS — S39

END

# FIG. 7

```
              ENDLESS
               LOOP
                 │
                 ▼
         ┌───────────┐ S4        ┌───────────┐ S7         ┌───────────┐ S10        ┌───────────┐ S13
         │ STATUS 1 ?│── NO ──▶  │STATUS 1' ?│── NO ──▶   │ STATUS 2 ?│── NO ──▶   │STATUS 2' ?│── NO ──▶  TO (S16)
         └───────────┘           └───────────┘            └───────────┘            └───────────┘            IN FIG.8
              │ YES                   │ YES                    │ YES                    │ YES
              ▼   S5                  ▼   S8                    ▼   S11                  ▼   S14
         ┌───────────┐           ┌───────────┐            ┌───────────┐            ┌───────────┐
         │ PROCESS IN│           │    DO     │            │ PROCESS IN│            │    DO     │
         │  STATUS 1 │           │  NOTHING  │            │  STATUS 2 │            │  NOTHING  │
         └───────────┘           └───────────┘            └───────────┘            └───────────┘
              │   S6                  │   S9                    │   S12                  │   S15
              ▼                       ▼                         ▼                        ▼
         ┌───────────┐           ┌───────────┐            ┌───────────┐            ┌───────────┐
         │GO TO       │           │ i > 31 →  │            │GO TO       │            │ i > 63 →  │
         │STATUS 1'   │           │GO TO STATUS 2│         │STATUS 2'   │            │GO TO STATUS 3│
         └───────────┘           └───────────┘            └───────────┘            └───────────┘
              │                       │                         │                        │
              ◀───────────────────────┴─────────────────────────┴────────────────────────┴───── (S18) TO (S27)
                                                                                                 IN FIG.8
```

EP 2 346 158 A1

FIG. 8

FROM (S13)
IN FIG.7

S16
STATUS 3 ?

S19
STATUS 3' ?

S22
STATUS 4 ?

S25
STATUS 4'

NO → NO → NO → NO

YES

S17
PROCESS IN
STATUS 3

YES

S20
DO
NOTHING

YES

S23
PROCESS IN
STATUS 4

S26
DO
NOTHING

S18
GO TO STATUS 3'

S21
i > 95 →
GO TO STATUS 4

S24
GO TO STATUS 4'

S27
i < 32 →
GO TO STATUS 1

TO (S4, S6, S9, S12, S15)
IN FIG.7

EP 2 346 158 A1

FIG. 9

( 1/128 INTERRUPT )

START A COUNT-UP
OF A COUNTER — S40

STATUS:
AN OUTPUTTING — S41
STATE ?

NO →

YES ↓

STATUS:
AN OUTPUT PREPARING — S42
STATE ?

NO →

YES ↓

Sin_itr = 0 — S43

NO →

YES ↓

H BRIDGE ON
STATUS: GO TO AN — S44
OUTPUTTING STATE

IS AN ERROR
DETECTED ? — S46

NO →

YES ↓

STATUS: GO TO AN OUTPUT
PREPARING STATE — S47

SET DA (REGISTER) — S45

DECIDE ON/OFF OF
A THYRISTOR — S48

MEASURE (CALCULATE)
EFFECTIVE POWER,
REACTIVE POWER, AND — S49
CURRENT EFFECTIVE VALUE

IS
Sin_itr EQUAL TO — S50
127 ?

NO →

YES ↓

SET A ZERO TIMING SIGNAL TO Lo,
AND SEND THE SIGNAL — S51
TO OTHER DEVICE

SET A ZERO
TIMING SIGNAL TO Hi — S52

( END )

## FIG. 10

```
      ( EDGE INTERRUPT )
              │
              ▼
┌─────────────────────────┐
│ ENTER INTO THIS ROUTINE WHEN │
│ A CHANGE Hi → Lo OF A ZERO   │──── S53
│ TIMING SIGNAL IS DETECTED    │
│ FROM THE COUNTER DEVICE      │
└─────────────────────────┘
              │
              ▼
┌─────────────────────────┐
│ SAVE ITS OWN COUNTER    │──── S54
│ VALUE OF Sin_itr        │
└─────────────────────────┘
              │
              ▼
          ( END )
```

## FIG. 11

```
        ( 21.71 ms INTERRUPT )
                  │
                  ▼                    S55
          ◇─────────────────◇
          │ OVERCURRENT STATE ? │──── NO ──────────────────┐
          ◇─────────────────◇                              │
                  │ YES                                     │
                  ▼                                         ▼
        ┌──────────────────┐                    ┌──────────────────┐
        │ COUNT UP AN      │──── S56            │ COUNT DOWN AN    │──── S57
        │ OVERCURRENT TIMER│                    │ OVERCURRENT TIMER│
        └──────────────────┘                    └──────────────────┘
                  │                                         │
                  ▼         S58                             │
          ◇─────────────────◇        S59                    │
          │ IS THE TIME UP ? │── YES ──┐                    │
          ◇─────────────────◇          ▼                    │
                  │ NO        ┌──────────────────┐          │
                  │           │ OVERCURRENT      │          │
                  │           │ PROTECTION       │          │
                  │           │ (H-BRIDGE OFF)   │          │
                  │           └──────────────────┘          │
                  │                    │                    │
                  ◀────────────────────┴────────────────────┘
                  ▼
        ┌──────────────────┐
        │ DECIDE A         │──── S60
        │ SWITCH INPUT     │
        └──────────────────┘
                  │
                  ▼
            ( RETURN )
```

*FIG. 12*

START

P ← LARGER ONE OUT OF A MASTER EFFECTIVE
POWER AND A SLAVE EFFECTIVE POWER

vdcc ← SMALLER ONE OUT OF A MASTER DC LINK
VOLTAGE AND A SLAVE DC LINK VOLTAGE          S61

IS A
DIFFERENCE BETWEEN
A COMMAND NUMBER OF REVOLUTION AND
AN ACTUAL NUMBER OF REVOLUTION WITHIN       S62
A PREDETERMINED
VALUE ?                                      NO

YES

A → SUCCESSIVELY INTEGRATED
VALUE OF A DIFFERENCE BETWEEN               S63
vdcc AND A REFERENCE VALUE

COMMAND NUMBER OF REVOLUTION ← NUMBER OF
REVOLUTION CALCULATED BY P + INTEGRATED VALUE A   S64

RETURN

FIG. 13

# FIG. 14

TIME CHART

HEAVY LOAD

LOAD    NO LOAD

THE NUMBER OF ENGINE REVOLUTION

THE NUMBER OF REVOLUTION AT NO LOAD

THE PROPERLY REQUIRED NUMBER OF REVOLUTION

BECAUSE OF THE INDICATED NUMBER OF REVOLUTION > ACTUAL NUMBER OF REVOLUTION, A STATE IN WHICH PMA IS IN SHORT SUPPLY IS CAUSED

FIG. 15

**INTERNATIONAL SEARCH REPORT**

| International application No. |
| --- |
| PCT/JP2009/005649 |

A. CLASSIFICATION OF SUBJECT MATTER
*H02P9/04(2006.01)i*

According to International Patent Classification (IPC) or to both national classification and IPC

B. FIELDS SEARCHED

Minimum documentation searched (classification system followed by classification symbols)
H02P9/04

Documentation searched other than minimum documentation to the extent that such documents are included in the fields searched
Jitsuyo Shinan Koho          1922–1996   Jitsuyo Shinan Toroku Koho    1996–2009
Kokai Jitsuyo Shinan Koho    1971–2009   Toroku Jitsuyo Shinan Koho    1994–2009

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| Y | JP 2000-217398 A  (Honda Motor Co., Ltd.), 04 August 2000 (04.08.2000), paragraphs [0014], [0017], [0031] & US 6281664 B1 | 1-3 |
| Y | JP 2003-79194 A  (Honda Motor Co., Ltd.), 14 March 2003 (14.03.2003), paragraph [0019] & US 2003/0042742 A1    & EP 1289117 A2 & TW 534947 B            & KR 10-2003-0020842 A & CN 1407715 A | 1-3 |
| Y | JP 10-8997 A  (Nissan Motor Co., Ltd.), 13 January 1998 (13.01.1998), paragraphs [0046] to [0057] (Family: none) | 2 |

| ☒ Further documents are listed in the continuation of Box C. | ☐ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search<br>21 December, 2009 (21.12.09) | Date of mailing of the international search report<br>28 December, 2009 (28.12.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/005649 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 6-178599 A  (Nissan Motor Co., Ltd.), 24 June 1994 (24.06.1994), claim 1 & US 5519305 A | 3 |

Form PCT/ISA/210 (continuation of second sheet) (April 2007)

**EP 2 346 158 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005286540 A